# EUROPÄISCHE PATENTSCHRIFT

(11) **EP 1 609 668 B1**
(45) Veröffentlichungstag und Bekanntmachung des Hinweises auf die Patenterteilung: **05.09.2007**
(21) Anmeldenummer: 05013014.5
(22) Anmeldetag: 16.06.2005
(51) Int. Cl.: B60P 1/00, B60P 1/36, B65D 88/60

(54) **Baueinheit für einen Anhänger**
Mounting unit for a trailer
Groupe de montage pour une remorque

(30) Priorität: 21.06.2004 DE 202004009744 U
(43) Veröffentlichungstag der Anmeldung: 28.12.2005
(73) Patentinhaber: Fliegl, Josef, 84513 Töging (DE)
(72) Erfinder: Fliegl, Josef, 84513 Töging (DE)
(74) Vertreter: Tetzner, Michael

(56) Entgegenhaltungen:
- EP-A- 0 685 360
- US-A- 5 273 390

## Beschreibung

Die Erfindung betrifft eine Baueinheit gemäß dem Oberbegriff des Anspruchs 1, insbesondere für einen LKW-Anhänger, mit einem Boden und einer Schiebewand. Sie bezieht sich ferner auf ein Fahrzeug, gemäß Anspruch 9, insbesondere einen Anhänger, mit einer derartigen Baueinheit.

Derartige Baueinheiten sind meist in LKW-Anhängern vorgesehen, um diese entleeren zu können. Die Schiebewand wird dabei üblicherweise auf einem Schiebeboden installiert, wobei zum Entleeren des Anhängers zunächst der Schiebeboden in Richtung einer Entleerungsöffnung verschoben und anschließend die Schiebewand betätigt werden.

Als Betätigungseinrichtung für die Schiebewand sind bereits die verschiedensten Mechanismen bekannt. In der EP-A-0 992 396 wird hierfür ein Kolben-ZylinderAggregat in Verbindung mit einem Umlenkhebelgestänge eingesetzt.

In der US 3,326,396 ist der Einsatz von auf beiden Seiten eines Anhängers angeordneten umlaufenden Ketten offenbart, mit Hilfe derer eine Bodenfläche und eine Schiebewand des Anhängers bewegt werden können.

Weitere Beispiele für Antriebsmechanismen der Stirnwand sind aus der US 5,314,290 bekannt. Bei einem dort gezeigten Ausführungsbeispiel wird der Einsatz einer an der Schiebewand befestigten Motorwinde sowie eines fixierten Seils beschrieben, das um die Motorwinde gewickelt ist. Durch Betätigung der Motorwinde wird die Schiebewand bewegt. Das fixierte Seil kommt bei dieser Ausführungsform im Bereich zwischen der Schiebewand und einer Entleerungsöffnung mit dem Schüttgut in Kontakt. Diese Lösung hat den Nachteil, dass es bei hartem und/oder scharfkantigem Schüttgut zu Beschädigungen des Seils kommen kann.

Die US-A-5,273,390, die als gatlungsbildend betrachtet wird, offenbart einen Lastwagen mit einer Schiebewand, die durch eine in einer Aussparung im Boden angeordnete Gewindespindel verschiebbar ist. Auch in der EP-A-0 685 360 ist eine Schiebewand vorgesehen, die über seitlich im Boden verlaufende Ketten verschoben wird.

Der Erfindung liegt die Aufgabe zugrunde, die Baueinheit mit einem Boden und einer Schiebewand, die über einen Antriebsmechanismus verschiebbar ist, betriebssicherer auszubilden.

Erfindungsgemäß wird diese Aufgabe durch die Merkmale des Anspruches 1 gelöst.

Die erfindungsgemäße Baueinheit, insbesondere für einen LKW-Anhänger, besteht im wesentlichen aus einem Boden und einer Schiebewand, die über einen Antriebsmechanismus verschiebbar ist, wobei der Antriebsmechanismus wenigstens einen Antriebsstrang und ein an der Schiebewand gehaltertes und mit dieser verschiebbares Antriebselement umfasst, wobei das Antriebselement mit dem Antriebsstrang derart in Wirkverbindung steht, dass eine Rotation des Antriebselements oder eine Rotation des Antriebsstrangs eine Verschiebung der Schiebewand bewirkt. Im Bereich des Bodens sind eine nach oben offene Aussparung zur Aufnahme des Antriebsstrangs sowie Mittel zum Abdecken der Aussparung vorgesehen.

Weiterhin weist der Boden im Bereich des Antriebsstranges ein in Längsrichtung verlaufendes, erhöhtes Führungsprofil auf, das die Aussparung für den Antriebsstrang aufweist und zugleich eine Führung für die Schiebewand bildet. Zwischen Schiebewand und Führungsprofil sind dabei vorzugsweise Gleitelemente vorgesehen.

In einer weiteren Ausgestaltung der Erfindung wird ein Fahrzeug, insbesondere ein Anhänger mit einer derartigen Baueinheit vorgeschlagen.

Weitere Merkmale der Erfindung sind Gegenstand der Unteransprüche.

In einen ersten Ausführungsbeispiel weist der Antriebsmechanismus wenigstens einen fixierten Antriebsstrang und ein an der Schiebewand gehaltertes und mit dieser verschiebbares, rotierendes Antriebselement auf, wobei der Antriebsstrang vorzugsweise durch wenigstens eine Rollenkette und das Antriebselement durch wenigstens ein angetriebenes Kettenrad gebildet werden.

Gemäß einer zweiten Variante werden der Antriebsstrang durch eine Gewindespindel und das Antriebselement durch eine mit der Gewindespindel zusammenwirkende Laufmutter gebildet.

Gemäß einem bevorzugten Ausführungsbeispiel weist der Boden im Bereich des Antriebsstranges ein in Längsrichtung verlaufendes, erhöhtes Führungsprofil auf, das die Aussparung für den Antriebsstrang aufweist und zugleich eine Führung für die Schiebewand bildet. Zwischen Schiebewand und Führungsprofil sind dabei vorzugsweise Gleitelemente vorgesehen.

Die Abdeckmittel zum Abdecken der Aussparung sind vorzugsweise feststehend ausgebildet. Weiterhin sind Mittel zum Abheben der Abdeckmittel vorgesehen, welche die Abdeckmittel von der Aussparung abheben, kurz bevor der darunter liegende Teilbereich des Antriebsstrangs mit dem Antriebselement in Wirkkontakt kommt.

Die Mittel zum Abdecken der Aussparungen werden insbesondere aus einem flexiblen Material, beispielsweise einem Gurtband, gebildet.

Weitere Vorteile und Ausgestaltungen der Erfindung werden im folgenden anhand der Beschreibung zweier Ausführungsbeispiele und der Zeichnung näher erläutert.

In der Zeichnung zeigen
- Fig. 1: eine schematische Längsschnittansicht eines Anhängeraufbaus,
- Fig. 2: eine Draufsicht des Anhängeraufbaus,
- Fig. 3: eine schematische Seitenansicht des Antriebsmechanismus gemäß einem ersten Ausführungsbeispiel,
- Fig. 4: eine Querschnittdarstellung des Ausführungsbeispiels gemäß Fig.2 im Bereich des Führungsprofils,
- Fig. 5: eine schematische Seitenansicht des Antriebsmechanismus gemäß einem zweiten Ausführungsbeispiel und
- Fig. 6: eine Querschnittdarstellung des Ausführungsbeispiels gemäß Fig.5 im Bereich des Führungsprofils,

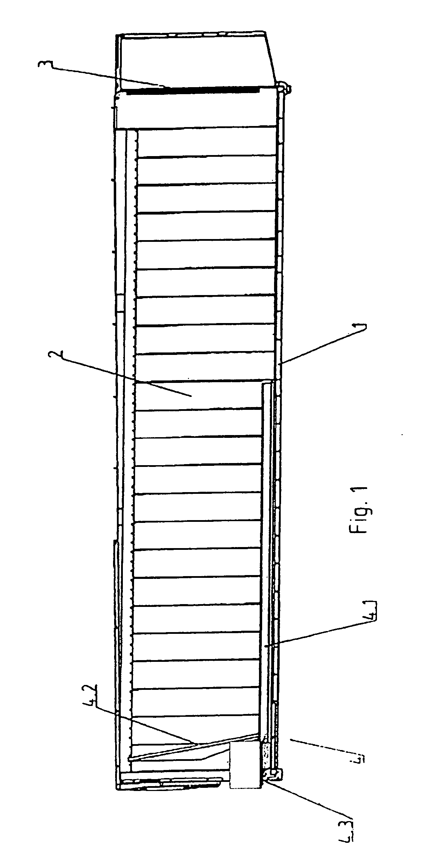

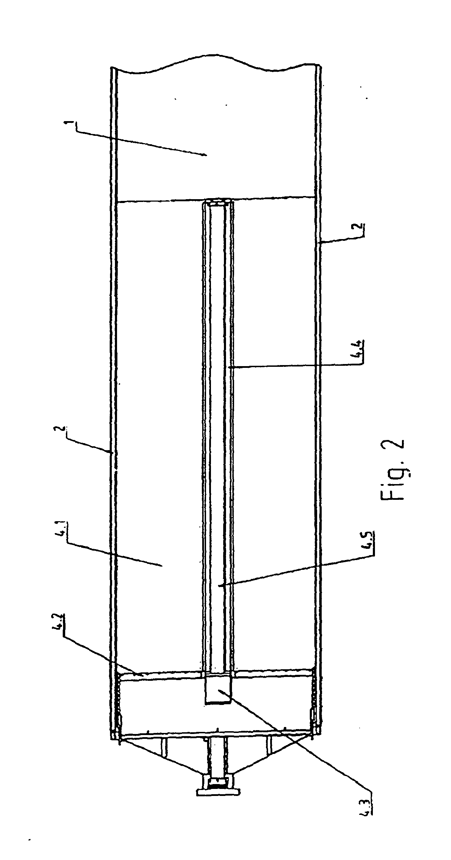

Der in den Fig. 1 und 2 dargestellte Anhängeraufbau weist im wesentlichen einen Boden 1, Seitenwände 2 und eine Entleerungsöffnung 3 auf. In seinem Inneren ist ferner eine Baueinheit 4 vorgesehen, die einen Boden 4.1 und eine Schiebewand 4.2 aufweist, die über einen Antriebsmechanismus 4.3 verschiebbar ist.

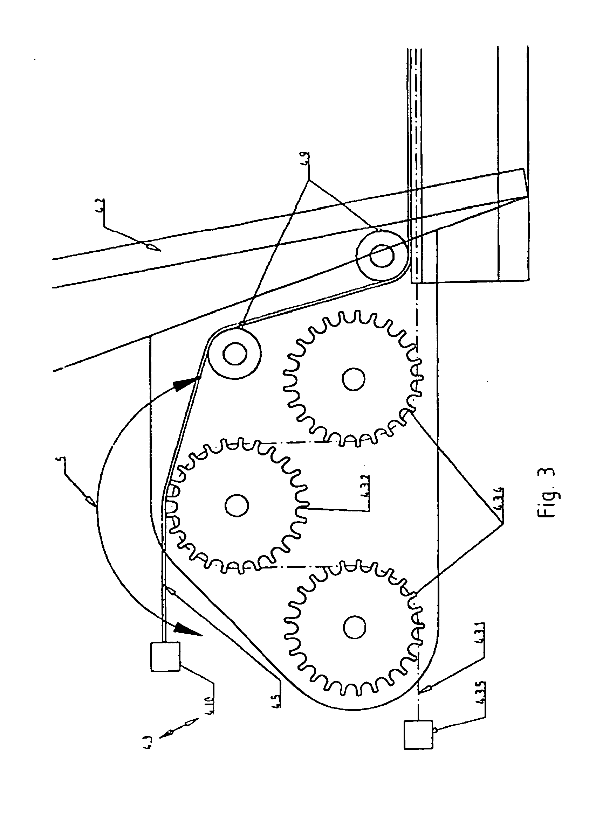

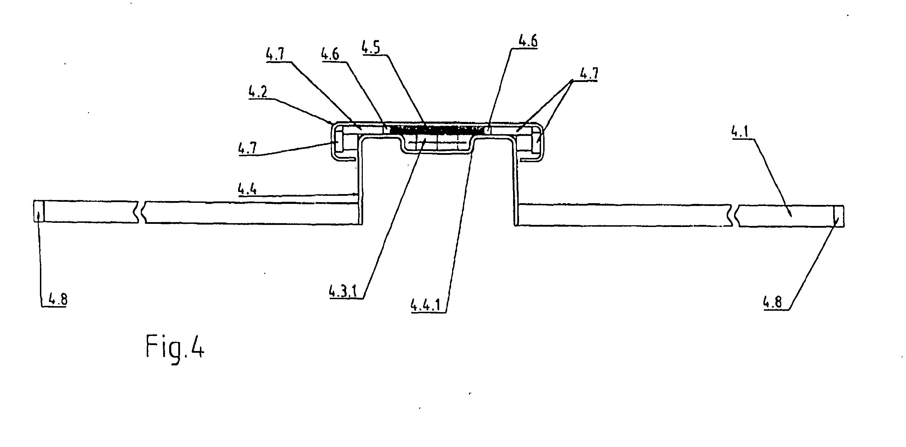

In den Fig. 3 und 4 ist der Antriebsmechanismus gemäß einem ersten Ausführungsbeispiel näher dargestellt. Er umfasst einen fixierten Antriebsstrang 4.3.1 und ein an der Schiebewand 4.2 gehaltertes und mit dieser verschiebbares, rotierendes Antriebselement 4.3.2, wobei das Antriebselement mit dem Antriebsstrang derart in Wirkverbindung steht, dass eine Rotation des Antriebselements eine Verschiebung der Schiebewand bewirkt.

Der Antriebsstrang 4.3.1 kann beispielsweise als Seil oder Rollenkette ausgebildet werden. Kommt ein Seil zur Anwendung, wird dieses ein oder mehrmals um das als Antriebsrolle ausgebildete Antriebselement gewickelt. Im dargestellten Ausführungsbeispiel ist als Antriebsstrang 4.3.1 eine Rollenkette vorgesehen, die vor und nach dem Antriebsrad 4.3.2 über zwei Umlenkkettenräder 4.3.4 umgelenkt wird.

Eine Spannvorrichtung 4.3.5 sorgt für eine ausreichende Spannung der Rollenkette. Das Antriebselement 4.3.2 wird über einen in seiner Drehrichtung umkehrbaren Motor angetrieben. Nachdem der Antriebsmechanismus fest an der Schiebewand 4.2 gehaltert ist, wird die Schiebewand 4.2 bei Betätigung des Motors längs des Antriebsstranges 4.3.1 und relativ zum Boden 4.1 verschoben. Je nach Drehrichtung (Doppelpfeil 5) des Motors wird die Schiebewand zur Entleerungsöffnung hin- oder von dieser wegbewegt.

Der Antriebsstrang 4.3.1 erstreckt sich vorzugsweise im Bereich der Längsmittelebene der Baueinheit 4 und zwar über die gesamte Länge des Bodens 4.1. Der Boden 4.1 kann entweder gleich den Fahrzeugboden 1 bilden oder ist, wie im dargestellten Ausführungsbeispiel, als Schiebeboden ausgebildet, der lediglich eine Teilfläche des gesamten Bodens des Fahrzeuges ausmacht. Der Schiebeboden 4 ist zusammen mit der Schiebewand 4.2 in herkömmliche Art und Weise mittels einer Zylinderkolbenanordnung verschiebbar. Wird somit der Schiebeboden 4.1 vom dargestellten hinteren Ende des Anhängers bis zur Entleerungsöffnung 3 vorgeschoben und wird anschließend die Schiebewand 4.2 in Richtung Entleerungsöffnung bewegt, kann die gesamte Ladung herausgeschoben werden.

Der Antriebsstrang 4.3.1 erstreckt sich im wesentlichen parallel zum Boden 4.1, wobei er lediglich im Bereich des Antriebsmechanismus 4.3 kurzzeitig mittels der beiden Umlenkkettenräder 4.3.4 nach oben um das Antriebselement 4.3.2 geführt wird.

Damit der Antriebsstrang 4.3.1 im Bereich zwischen der Schiebewand 4.2 und dem Ende des Bodens 4.1 nicht mit dem Schüttgut in Kontakt kommt, ist die in Fig. 4 näher dargestellte Konstruktion vorgesehen. Der Boden weist im Bereich des Antriebsstranges 4.3.1 ein in Längsrichtung verlaufendes erhöhtes Führungsprofil 4.4 auf, dass eine Aussparung 4.4.1 für den Antriebsstrang 4.3.1 vorsieht und gleichzeitig als Führung für die Schiebewand 4.2 dient. Der in der Aussparung 4.4.1 eingelegte Antriebsstrang 4.3.1 wird von Mitteln, die hier durch ein Gurtband 4.5 gebildet werden, abgedeckt. Damit das Gurtband 4.5 sauber über der Aussparung 4.4.1 zu liegen kommt, sind seitliche Führungen 4.6, beispielsweise in Form von Vierkantstählen, vorgesehen.

In Fig. 4 ist die Schiebewand nur mit ihrem unteren Ende dargestellt. Zwischen der Schiebewand 4.2 und dem Führungsprofil 4.4 sind Gleitelemente 4.7 so angeordnet, sodass sowohl eine Führung auf der Oberseite des Führungsprofil als auch an den Seiten gewährleistet ist. Eine zusätzliche Führung der Schiebewand 4.2 erfolgt im Bereich der Seitenwände 2. Sowohl der Schiebeboden 4.1 als auch die Schiebewand 4.2 sind im Bereich der Seitenwände mit Abdichtungen 4.8 versehen, die verhindern, dass Schüttgut in den Zwischenbereich gerät.

Damit der Antriebsstrang 4.3.1 im Bereich des Antriebselements 4.3.2 mit diesem in Wirkkontakt kommen kann, wird das Gurtband 4.5 vorher über Umlenkrollen 4.9 abgehoben. Eine Spannvorrichtung 4.10 stellt sicher, dass das Gurtband ausreichend straff gespannt über der Aussparung 4.4.1 liegt.

Das Gurtband 4.5. schützt den Antriebsstrang vor einem Kontakt mit Schüttgut und gewährleistet somit einen sicheren Betrieb. Das Führungsprofil stellt zudem eine ordentliche Führung der Schiebewand sicher.

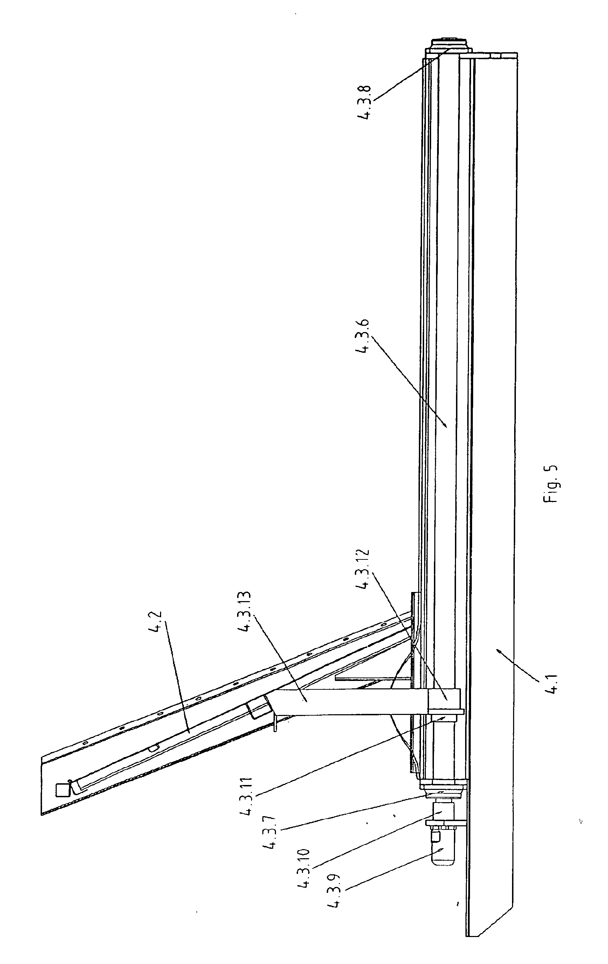

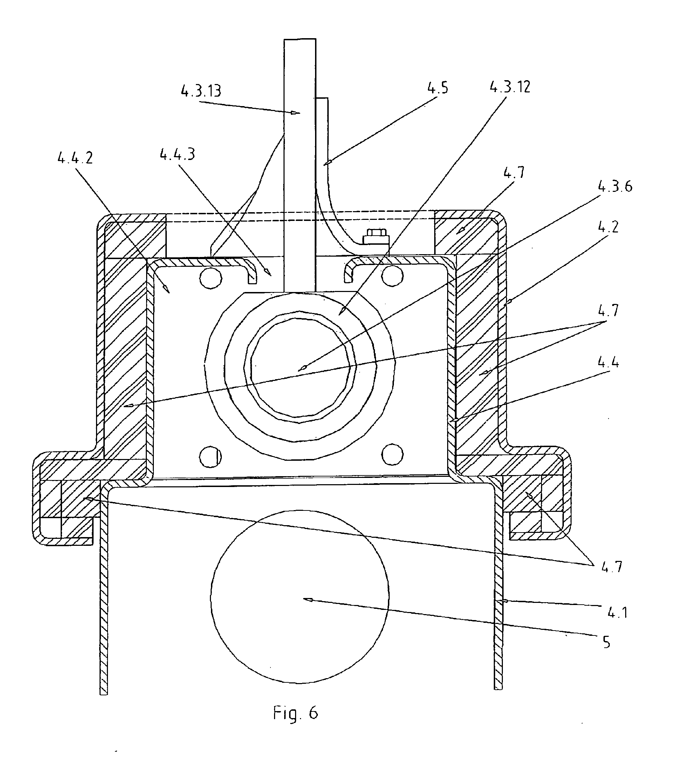

In den Fig. 5 und 6 ist der Antriebsmechanismus gemäß einen zweiten Ausführungsbeispiel näher dargestellt. Der Antriebsstrang wird hier durch eine Gewindespindel 4.3.6 gebildet, die beispielsweise durch Axial-Pendelrollenlager 4.3.7 und 4.3.8 gelagert ist. Die Gewindespindel ist vorzugsweise als Trapezgewindespindel ausgebildet und wird über einen Motor 4.3.9, insbesondere einen Orbitalmotor mit oder ohne Getriebeübersetzung angetrieben. Der Motor und die Getriebespindel sind über eine Muffenkupplung 4.3.10 verbunden. Die Mitnahme der Schiebewand 4.2 erfolgt über eine mit der Gewindespindel 4.3.6 zusammenwirkende Laufmutter 4.3.11, welche in einer Führungsbuchse 4.3.12 montiert ist, wobei die Führungsbuchse 4.3.12 über ein Verbindungselement 4.3.13 mit der Stirnwand 4.2 verbunden ist.

Die Länge der Gewindespindel 4.3.6 richtet sich nach den Anforderungen der Schiebelänge der Baueinheit. Je nach Drehrichtung des Motors bewegt sich die Laufmutter 4.3.11 zusammen mit der Schiebewand 4.2 in die eine bzw. andere Richtung.

Die Gewindespindel 4.3.6 erstreckt sich vorzugsweise wieder im Bereich der Längsmittelebene der Baueinheit 4 und zwar im wesentlichen über die gesamte Länge des Bodens 4.1. Der Boden 4.1 kann entweder gleich den Fahrzeugboden 1 bilden oder ist, wie im dargestellten Ausführungsbeispiel, als Schiebeboden ausgebildet, der lediglich eine Teilfläche des gesamten Bodens des Fahrzeuges ausmacht. Der Schiebeboden 4 ist zusammen mit der Schiebewand 4.2 in herkömmlicher Art und Weise mittels einer Zylinderkolbenanordnung 5 verschiebbar. Wird somit der Schiebeboden 4.1 vom dargestellten hinteren Ende des Anhängers bis zur Entleerungsöffnung 3 vorgeschoben und wird anschließend die Schiebewand 4.2 in Richtung Entleerungsöffnung bewegt, kann die gesamte Ladung heraus geschoben werden.

Damit die Gewindespindel 4.3.6 im Bereich zwischen der Schiebewand 4.2 und dem Ende des Bodens 4.1 nicht mit dem Schüttgut in Kontakt kommt, ist die in Fig. 6 näher dargestellte Konstruktion vorgesehen. Der Boden weist wiederum im Bereich der Gewindespindel 4.3.6 ein in Längsrichtung verlaufendes erhöhtes Führungsprofil 4.4 auf, welches eine nach oben offene Aussparung 4.4.2 für die Gewindespindel aufweist. Das Führungsprofil weist oben einen in Längsrichtung verlaufenen Spalt 4.4.3 auf, durch den das Verbindungselement 4.3.13 hindurchragt.

Üblicherweise ist der Spalt 4.4.3 durch Abdeckmittel 4.5 abgedeckt, die insbesondere aus einem flexiblen Material bestehen und beispielsweise durch einen Kunststoffstreifen oder ein Gurtband gebildet werden. Das Verbindungselement 4.3.13 klappt das Abdeckelement 4.5 selbsttätig auf (siehe Fig. 6). Nach dem Passieren des Verbindungselementes 4.3.13 schließen sich die Abdeckmittel wieder.

Wie schon beim ersten Ausführungsbeispiel dient das Führungsprofil nicht nur zur Aufnahme des Antriebsstranges, sondern gleichzeitig auch als Führung der Schiebewand 4.2. Die Schiebewand umgreift daher das Führungsprofil in der in Fig. 6 dargestellten Art und Weise, wobei zwischen Schiebewand 4.2 und Führungsprofil 4.4 wiederum Gleitelemente 4.7 vorgesehen sind. Die Gleitelemente können dabei gegebenenfalls auch als Rollen ausgebildet sein.

Während im ersten Ausführungsbeispiel gemäß den Fig. 3 und 4 der Antriebsstrang fixiert ist und das Antriebselement rotiert, wird bei dem zweiten Ausführungsbeispiel der Antriebsstrang (Gewindespindel) angetrieben und das Antriebselement (Laufmutter) drehfest an der Schiebewand gehaltert.

In beiden Ausführungsbeispiel ist ein in Längsrichtung verlaufenes, erhöhtes Führungsprofil vorgesehen, dass zum einen eine Aussparung für den Antriebsstrang und zugleich eine Führung für die Schiebewand bildet.

## Patentansprüche

1. Baueinheit (4), insbesondere für einen LKW-Anhänger, mit einem Boden (4.1) und einer Schiebewand (4.2), die über einen Antriebsmechanismus (4.3) verschiebbar ist, wobei der Antriebsmechanismus wenigstens einen Antriebsstrang (4.3.1; 4.3.6) und ein an der Schiebewand gehaltertes und mit dieser verschiebbares Antriebselement (4.3.2; 4.3.11) umfasst, wobei das Antriebselement mit dem Antriebsstrang derart in Wirkverbindung steht, dass eine Rotation des Antriebselements oder eine Rotation des Antriebsstrangs eine Verschiebung der Schiebewand bewirkt, wobei im Bereich des Bodens (4.1) eine nach oben offene Aussparung (4.4.1; 4.4.2) zur Aufnahme des Antriebsstrangs sowie Mittel (4.5) zum Abdecken der Aussparung vorgesehen sind,
**dadurch gekennzeichnet, dass** der Boden im Bereich des Antriebsstranges (4.3.1; 4.3.6) ein in Längsrichtung verlaufendes, erhöhtes Führungsprofil (4.4) aufweist, das die Aussparung für den Antriebsstrang und zugleich eine Führung für die Schiebewand bildet.

2. Baueinheit nach Anspruch 1, **dadurch gekennzeichnet, dass** der Antriebsmechanismus wenigstens einen fixierten Antriebsstrang (4.3.1) und ein an der Schiebewand gehaltertes und mit dieser verschiebbares, rotierendes Antriebselement (4.3.2) umfasst.

3. Baueinheit nach Anspruch 1, **dadurch gekennzeichnet, dass** der Antriebsstrang (4.3.1) durch wenigstens eine Rollenkette und das Antriebselement (4.3.2) durch wenigstens ein angetriebenes Kettenrad gebildet werden.

4. Baueinheit nach Anspruch 1, **dadurch gekennzeichnet, dass** der Antriebsstrang durch eine Gewindespindel (4.3.6) und das Antriebselement durch eine mit der Gewindespindel zusammenwirkende Laufmutter (4.3.11) gebildet werden.

5. Baueinheit nach Anspruch 1, **dadurch gekennzeichnet, dass** der Antriebstrang (4.3.1; 4.3.6) im Bereich der Längsmittelebene der Baueinheit angeordnet ist.

6. Baueinheit nach Anspruch 1, **dadurch gekennzeichnet, dass** zwischen Schiebewand und Führungsprofil wenigstens ein Gleitelement (4.7) vorgesehen ist.

7. Baueinheit nach Anspruch 1, **dadurch gekennzeichnet, dass** die Abdeckmittel (4.5) zum Abdecken der Aussparung feststehend ausgebildet sind und Mittel zum Abheben der Abdeckmittel vorgesehen sind, welche die Abdeckmittel von der Aussparung abheben, kurz bevor der darunter liegende Teilbereich des Antriebsstrangs (4.3.1; 4.3.6) mit dem Antriebselement (4.3.2 ; 4.3.11) in Wirkkontakt kommt.

8. Baueinheit nach Anspruch 1, **dadurch gekennzeichnet, dass** die Mittel (4.5) zum Abdecken der Aussparung aus einem flexiblen Material bestehen.

9. Fahrzeug, insbesondere ein Anhänger, mit einer Baueinheit (4) gemäß einem oder mehreren der vorangegangenen Ansprüche.

## Claims

1. Construction unit (4), in particular for a lorry trailer, with a floor (4.1) and a sliding wall (4.2) which can be displaced via a drive mechanism (4.3), wherein the drive mechanism comprises at least one drive train (4.3.1; 4.3.6) and one drive element (4.3.2; 4.3.11) which is secured to the sliding wall and can be displaced with this, wherein the drive element is actively connected to the drive train such that a rotation of the drive element or a rotation of the drive train gives rise to a displacement of the sliding wall, wherein a recess (4.4.1; 4.4.2), which is open upwards, for accommodating the drive train as well as means (4.5) for covering the recess are provided in the region of the floor (4.1),
**characterised in that**, in the region of the drive train (4.3.1; 4.3.6), the floor has a raised guide profile (4.4) which extends in the longitudinal direction and forms the recess for the drive train and at the same time a guide for the sliding wall.

2. Construction unit according to Claim 1, **characterised in that** the drive mechanism comprises at least one fixed drive train (4.3.1) and one rotating drive element (4.3.2) which is secured to the sliding wall and can be displaced with this.

3. Construction unit according to Claim 1, **characterised in that** the drive train (4.3.1) is formed by at least one roller chain and the drive element (4.3.2) by at least one driven sprocket wheel.

4. Construction unit according to Claim 1, **characterised in that** the drive train is formed by a threaded spindle (4.3.6) and the drive element by a running nut (4.3.11) which interacts with the threaded spindle.

5. Construction unit according to Claim 1, **characterised in that** the drive train (4.3.1; 4.3.6) is disposed in the region of the longitudinal centre plane of the construction unit.

6. Construction unit according to Claim 1, **characterised in that** at least one slide element (4.7) is provided between the sliding wall and the guide profile.

7. Construction unit according to Claim 1, **characterised in that** the covering means (4.5) for covering the recess are formed in a stationary manner and means are provided for lifting the covering means, which means lift the covering means off the recess shortly before the underlying sub-region of the drive train (4.3.1; 4.3.2) comes into active contact with the drive element (4.3.2; 4.3.11).

8. Construction unit according to Claim 1, **characterised in that** the means (4.5) for covering the recess consist of a flexible material.

9. Vehicle, in particular a trailer, with a construction unit (4) according to one or more of the preceding Claims.

## Revendications

1. Groupe de montage (4), en particulier pour une remorque de poids lourd, avec un fond (4.1) et une paroi coulissante (4.2), qui est déplaçable par un mécanisme d'entraînement (4.3), où le mécanisme d'entraînement comprend au moins une chaîne cinématique (4.3.1; 4.3.6) et un élément d'entraînement (4.3.2; 4.3.11) retenu à la paroi coulissante et déplaçable avec celle-ci, où l'élément d'entraînement est en liaison fonctionnelle avec la chaîne cinématique de telle sorte qu'une rotation de l'élément d'entraînement ou bien une rotation de la chaîne cinématique provoque un déplacement de la paroi coulissante, où sont prévues dans la zone du fond (4.1) un évidement (4.4.1; 4.4.2) ouvert vers le haut pour la réception de la chaîne cinématique et des moyens (4.5) pour recouvrir l'évidement,
**caractérisé en ce que** le fond présente dans la zone de la chaîne cinématique (4.3.1; 4.3.6) un profilé de guidage relevé (4.4) s'étendant dans la direction longitudinale, qui constitue l'évidement pour la chaîne cinématique et en même temps un guidage pour la paroi coulissante.

2. Groupe de montage selon la revendication 1, **caractérisé en ce que** le mécanisme d'entraînement comprend au moins une chaîne cinématique fixe (4.3.1) et un élément d'entraînement tournant (4.3.2) retenu à la paroi coulissante et déplaçable avec celle-ci.

3. Groupe de montage selon la revendication 1, **caractérisé en ce que** la chaîne cinématique (4.3.1) est formée par au moins une chaîne à rouleaux et l'élément d'entraînement (4.3.2) par au moins une roue à chaîne entraînée.

4. Groupe de montage selon la revendication 1, **caractérisé en ce que** la chaîne cinématique est formée par une tige filetée (4.3.6) et l'élément d'entraînement par un écrou mobile (4.3.11) coopérant avec la tige filetée.

5. Groupe de montage selon la revendication 1, **caractérisé en ce que** la chaîne cinématique (4.3.1; 4.3.6) est disposée dans la zone du plan médian longitudinal du groupe de montage.

6. Groupe de montage selon la revendication 1, **caractérisé en ce qu'**il est prévu entre la paroi coulissante et le profilé de guidage au moins un élément coulissant (4.7).

7. Groupe de montage selon la revendication 1, **caractérisé en ce que** les moyens de recouvrement (4.5) pour recouvrir l'évidement sont fixes, et que des moyens pour relever les moyens de recouvrement sont prévus qui relèvent les moyens de recouvrement de l'évidement peu avant que la zone partielle située en dessous de la chaîne cinématique (4.3.1; 4.3.6) vienne en contact fonctionnel avec l'élément d'entraînement (4.3.2; 4.3.11).

8. Groupe de montage selon la revendication 1, **caractérisé en ce que** les moyens (4.5) pour recouvrir l'évidement sont constitués d'un matériau flexible.

9. Véhicule, en particulier une remorque, avec un groupe de montage (4) selon l'une ou plusieurs des revendications précédentes.
